(19) Europäisches Patentamt
European Patent Office
Office européen des brevets

(11) Publication number 0 031 657
A1

(12) **EUROPEAN PATENT APPLICATION**

(21) Application number: **80304457.7**

(22) Date of filing. **10.12.80**

(51) Int. Cl.³: **B 01 J 19/06**, C 10 L 7/02, C 09 D 7/00

(30) Priority: **28.12.79 GB 7944528**

(43) Date of publication of application: **08.07.81 Bulletin 81/27**

(84) Designated Contracting States: **AT BE CH DE FR GB IT LI NL SE**

(71) Applicant: **IMPERIAL CHEMICAL INDUSTRIES LIMITED, Imperial Chemical House Millbank, London SW1P 3JF (GB)**

(72) Inventor: **Bognolo, Guido, Avenue de la Bugrane 89, B-1020 Bruxelles (BE)**

(74) Representative: **Jones, Martin et al, Imperial Chemical Industries Limited Legal Department: Patents Thames House North Millbank, London SW1P 4QG (GB)**

(54) **Process for the thickening of organic liquids and product thereof.**

(57) Organic $C_5$-14 hydrocarbon liquids are thickened or gelled by addition of barium di(dodecylbenzene sulphonate) in neutral form at concentrations of 0,1 to 20% by weight. The water content of the barium compound is from 0.1 to 5% by weight.

EP 0 031 657 A1

PROCESS FOR THE THICKENING OF ORGANIC LIQUIDS AND PRODUCT THEREOF

Metal salts of fatty acids, in particular aluminium soaps derived from fatty acids such as lauric, naphthenic, and oleic acids and from mixed fatty acids derived from coconut oil, have been used to prepare gels of hydrocarbon liquids, notably gasoline fuels. Such gels are, however, unstable in the presence of various substances. Formulations based on naturally occuring materials also tend to be variable in performance.

We have now found that barium di-(dodecyl benzene) sulphonate is capable of thickening certain organic liquids, in a rather specific manner.

Alkali metal sulphonates are described extensively in the literature. Calcium and barium are commonly used metals and the sulphonate may be essentially pure material, or, more commonly a mixed petroleum sulphonate with a given average molecular weight. The stoichiometry of the compound is variable. For many applications excess base is present. US Patent 3 694 179 describes methods of making "overbased" barium dodecylbenzene sulphonate. By the term "overbased" is therein meant containing a greater than stoichiometric amount of barium for full neutralisation of the sulphonic acid. Water is present in the reactions involved which is later distilled off and a solution of the desired overbased sulphonate is obtained in xylene, which gels after the xylene is distilled off. The product re-dissolves in benzene.

We have found that while overbased barium dodecylbenzene sulphonate has a lower tendency to gel certain hydrocarbon solvents, the neutral material has a much higher tendency to gel such solvents.

Overbased metal (including barium) sulphonates are known from U.K. Patent 1 155 203 as additives for lubricating oils, that is, oils of high carbon number, say $C_{16}$ and above. At page 4 line 67 et seq. the known relationship of increased viscosity with degree of overbasing is discussed. Surprisingly the metal sulphonate system of the present invention shows a contrary result.

Overbased and neutral metal sulphonates and their solutions in organic solvents are mentioned in UK Patents 920 035, 944 218, 1 472 735 and 1 172 779 and US Patents 4 145 302. UK Patent 1 222 770 describes the production of calcium and barium sulphonates and their eventual solution in high molecular weight paraffinic oil. In Example 4 a solution of propylene polymer (mol wt 430) alkylated benzene sulphonate in paraffin oil (viscosity 105 SUS at 37.8°C) is reacted with barium nitrate and baryta to give a neutral product. The concentration of active material is at least 35% by weight and even so, a non-gelled material is obtained. With barium chloride a gel is obtained.

The present invention shows effects quite contrary to such observations since low concentrations of the selected barium compound in low molecular weight solvents gel, while high molecular weight solvents do not gel.

US Patent 3 311 567 describes 1-10% by weight solutions of alkali and alkaline earth metal solutions in organic solvents such as benzene. The sulphonates described are mixed hydrocarbon sulphonates and we have found that such materials give solutions as promised in that specification : no gels are formed. Barium di (dodecylbenzene sulphonate) as such is not proposed in US Patent specification 3 311 567. Indeed, that compound has a molecular weight of around 770-800 which is higher than the upper limit of 700 proposed in the above US specification. However the basis for the calculation of the figure of 700 therein is not clear. It has been found that under specified conditions low concentrations of certain barium sulphonates give especially useful and unexpected results.

The present invention provides a process for thickening organic hydrocarbon liquids containing from five to fourteen carbon atoms which comprises dissolving therein barium di(dodecylbenzene sulphonate) in essentially neutral form at a concentration in the range 0,1 to 20% by weight, the water content of the barium compound being from 0,1 to 5% by weight of that compound.

The water content is critical. The technically interesting aspect of the invention is the formation of a gel and for a given solvent there is an optimum water concentration. This is typically in the range 0, 5 to 3, 0% by weight of the barium compound, preferably 1, 5 to 3, 0%. The amount of barium compound used is less critical and will depend more on the degree of thickening required 0, 5 to 1, 0% gives weak gels, 1, 0 to 8% gives stronger gels, above this level very strong gels may be obtained which may be too stiff to handle for some applications. 1, 0 to 5% is usually the most cost effective amount.

By "essentially neutral" we mean a barium compound not containing significant excess of containing either acid or base

In practice this is conveniently defined in terms of pH of an aqueous dispersion of the barium compound to be used. It should be in the range 5 to 10, preferably 6 to 9, more preferably 6, 5 to 8, 5. High pH (eg. above 10) is characteristic of the overbased materials discussed above.

Hydrocarbons with (or containing) more than 14 carbon atoms are not effectively thickened. Thus lubricating oil and crude oil is not usefully thickened and chlorinated hydrocarbons are not thickened Gels can be broken by the addition of polar solvents, such as acetone.

The thickening effect of barium di(dodecyl benzene sulphonate) is most marked in the case of aliphatic hydrocarbons, of for example n-hexane. More polar liquids may also be thickened effectively for example aromatic hydrocarbons (such as xylene and benzene), gasoline and white spirit).

The invention therefore also provides thickened hydrocarbon liquids containing essentially neutral barium di(dodecyl benzene sulphonate) in a concentration of 0, 1 to 20% by weight, the total amount of water present, calculated on the weight of the barium compound not exceeding 5% by weight thereof. The origin of the water is not especially important : it may be provided by the barium compound or the system to be thickened.

The gel will tolerate the presence of dissolved and suspended additives to an extent dependent upon the physical state solubility and polarity of the additive. The limit of concentration of additive is best determined by small scale trial. Insoluble solids such as salts and pigments are well tolerated. Higher molecular weight hydrocarbons,chlorinated hydrocarbons, or surface active agents are also useable in amounts up to about 95% preferably up to 70%, weight even though they do not produce gels alone. Some gels have thixtotropic properties which may be useful in some application.

Applications of thickened or gelled products include paints, inks, polishes, paint strippers, plastics and pesticide compositions.

The invention is illustrated by the following Examples and comparative data are given to demonstrate the critical nature of certain parameters.

EXAMPLE 1

1 gm of barium di( dodecyl benzene sulphonate)(BaDBS) was added to 100g. of xylene (a mixture of ortho, meta and para isomers) and allowed to stand for 1 hour at 57°C. The mixture was then stirred for 30 seconds using an "**Ultraturrax**" mixer operating at medium speed and allowed to stand at 57°C for 15 minutes. This gave a standard 1% by weight mixture of the barium compound in xylene. For higher concentrations of the barium compound, further quantities of barium di( dodecyl benzene sulphonate) were added to the standard mixture, the resulting mixture allowed to equilibrate at 57°C for 15 minutes, stirred by means of the "**Ultraturrax**" mixer until apparently homogeneous and then allowed to stand for 15 minutes at 57°C. Mixtures containing 2, 3, 4, 5 and 10 percent by weight of the barium compound were thus prepared.

Each of the mixtures was allowed to cool and the viscosity measured at 40°C (Experiment A) and 20°C (Experiment B) by means of a Brookfield RVT viscometer (spindle 5, speed 100).

The viscosity values measured(in centipoise) are shown under Experiments A and B of Table 1.

TABLE 1

| Concentration of BaDBS (percent by weight) | Viscosity (centipoise) | |
|---|---|---|
| | Experiment A | Experiment B |
| 1 | 100 | 140 |
| 2 | 420 | 560 |
| 3 | 940 | 1060 |
| 4 | 1040 | 1680 |
| 5 | 2160 | 2480 |
| 10 | Thick gel* | Thick gel* |

* Viscosity not determinable

The procedure of this example was repeated with similar amounts of other metal compounds as follows.

aluminium monostearate

aluminium distearate

calcium distearate

calcium di(dodecylbenzene sulphonate)

aluminum di(dodecylbenzene sulphonate) hydroxide.

No significant gelling or thickening was observed with any of the above, except with aluminium mono stearate.

However, in ageing tests, the aluminium compound showed instability. Results of such tests were as follows.

Additive abbreviations.

A = aluminium monostearate

B = barium di(dodecylbenzene sulphonate).

| Additive | g of additive per 100 g xylene | Viscosity (cps) at 20°C after ageing after given times (hours) | | | |
|---|---|---|---|---|---|
| | | 0 | 1 | 16 | 72- |
| A | 1 | 200 | 40 | 0 | nm |
| B | 1 | 140 | 160 | 160 | nm |
| A | 3 | 480 | 240 | nm | 40 |
| B | 3 | 1060 | 1060 | nm | 1120 |
| A | 4 | 760 | nm | 240 | nm |
| B | 4 | 1680 | nm | 1680 | nm |
| A | 5 | 1080 | 720 | 360 | nm |
| B | 5 | 2480 | 2480 | 2520 | nm |

nm = not measured.

EXAMPLE 2

Example 1 was repeated using n-hexane in place of xylene. The results of viscosity measurements of the mixtures at 40°C (Experiment C) and 20°C (Experiment D) are shown in Table 2. Gelling occured in this case without large increases in viscosity.

TABLE 2

| Concentration of BaDBS (percent by weight) | Viscosity (centipoise) | |
|---|---|---|
| | Experiment C | Experiment D |
| 1 | 40 (thin gel) | 40 (thin gel) |
| 2 | 80 (gel) | 40 (gel) |
| 3 | 3800 (gel) | Thick gel |
| 5 | Thick gel | Thick gel |
| 10 | Thick gel | Thick gel |

EXAMPLE 3

Example 1 was repeated,using separately benzene, white spirit, and diethyl ether in place of xylene. 1 percent by weight of barium di-dodecyl benzene sulphonate in benzene or white spirit gave a thin gel, 5% and 10% by weight a thick gel. Ten percent by weight of barium di-dodecyl benzene sulphonate in diethyl ether gave a thick solution having the consistency of syrup.

EXAMPLE 4

This example demonstrates the effect of varying water content of the barium di(dodecylbenzene sulphonate). About 500 g the barium compound was prepared by neutralising barium hydroxide in aqueous solution with the sulphonic acid. The product was washed and drained and heated in an air current at 80°C. Periodically as the barium compound dried, samples of about 3 g were removed and dispersed in xylene (97 g). The resultant dispersion was assessed after 48 hours. Water content of the dispersion was measured, and calculated as a percentage of the weight of barium compound, (BaDBS)

| % wt. Water content | Assessment |
|---|---|
| 19 | No dispersion : BaDBS settles |
| 10 | No dispersion : BaDBS coagulates |
| 5.8 | Part only BaDBS dissolves |
| 4.7 | BaDBS dispersed : cloudy : viscosity 518 cps |
| 3.8 | BaDBS dispersed : cloudy viscosity 740 cps |
| 2.9 | BaDBS dispersed : cloudy viscosity 21.000 cps |

| %wt. Water content | Assessment |
|---|---|
| 2.0 | BaDBS dispersed : clear gel viscosity 113.000 cps |
| 1.6 | BaDBS dispersed : clear gel viscosity not measured |
| 1.0 | BaDBS dispersed : clear gel viscosity 33.000 cps |
| 0.7 | BaDBS dispersed : clear gel viscosity 28.000 cps |

Viscosities given are an average of two or three separate experiments.

EXAMPLE 5

The example shows how the neutrality of the barium di(dodecylbenzene sulphonate)affects its thickening properties. The material was prepared from an aqueous solution of barium hydroxide which was mixed with dodecylbenzene sulphonic acid. pH was monitored continually and samples were removed at various pH levels then dried to 3% weight water. The barium compound was dissolved in xylene at a level of 3% by weight and the viscosity measured after 48 hours at 20°C.

| Ph of suspension at sampling | Viscosity cps |
|---|---|
| 7.20 | 2320 |
| 8.98 | 2288 |
| 9.57 | 1960 |
| 9.85 | 1300 |
| 11.40 | 1152 |

0031657

PROCESS FOR THE THICKENING OF ORGANIC LIQUIDS AND PRODUCT THEREOF

CLAIMS

1. A process for thickening organic hydrocarbon liquids containing from five to fourteen carbon atoms which comprises dissolving therein barium di(dodecylbenzene sulphonate) in essentially neutral form at a concentration in the range 0, 1 to 20% by weight, the water content of the barium compound being from 0, 1 to 5% by weight of that compound.

2. A process according to claim 1 in which the water concentration is from 0, 5 to 3, % by weight of the barium compound.

3. A process according to Claim 1 or claim 2 in which the amount of barium compound is from 1, 0 to 5% by weight of the organic liquid used.

4. Thickened hydrocarbon liquids containing essentially neutral barium di(dodecylbenzene sulphonate) in a concentration of 0, 1 to 20% by weight, the total amount of water present, calculated on the weight of the barium compound not exceeding 5% by weight thereof.

European Patent Office

**EUROPEAN SEARCH REPORT**

0031657

Application number

EP 80 30 4457

## DOCUMENTS CONSIDERED TO BE RELEVANT

| Category | Citation of document with indication, where appropriate, of relevant passages | Relevant to claim |
|---|---|---|
| A | US - A - 2 885 360 (W.L. HADEN, C.O. MARTIN)<br>* Column 1, line 68 - column 2, line 71; column 4, line 8; example VIII; claims 1,2 *<br>-- | |
| DA | GB - A - 944 218 (CALIFORNIA RESEARCH CORP.) | |
| DA | GB - A - 1 155 203 (CONTINENTAL OIL COMP.) | |
| DA | GB - A - 1 472 735 (KING IND.INC.) | |
| A | DE - A - 2 653 717 (KARONITE CHEMICAL CO.)<br>* Page 17, paragraph 2 *<br>---- | |

**CLASSIFICATION OF THE APPLICATION (Int. Cl.³)**

B 01 J 19/06
C 10 L 7/02
C 09 D 7/00

**TECHNICAL FIELDS SEARCHED (Int. Cl.³)**

B 01 J 19/06
C 10 L 7/02
C 09 D 7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-03-1981 | PFANNERER |

EPO Form 1503.1 06.78